# EUROPÄISCHE PATENTSCHRIFT

(11) **EP 2 944 926 B1**
(45) Veröffentlichungstag und Bekanntmachung des Hinweises auf die Patenterteilung: **06.01.2021**
(21) Anmeldenummer: 15001418.1
(22) Anmeldetag: 12.05.2015
(51) Int. Cl.: G01F 1/66, G01F 15/18

(54) **FLÜSSIGKEITSVOLUMENSTROMSENSOR**
FLUID VOLUME FLOW SENSOR
DÉBITMÈTRE DE LIQUIDE

(30) Priorität: 12.05.2014 DE 102014006743
(43) Veröffentlichungstag der Anmeldung: 18.11.2015
(73) Patentinhaber: WILO SE, 44263 Dortmund (DE)
(72) Erfinder: Materne, Thomas, 59348 Lüdinghausen (DE); Diekmann, Ulrich, 59174 Kamen (DE)
(74) Vertreter: Cohausz Hannig Borkowski Wißgott

(56) Entgegenhaltungen:
- EP-A1- 0 477 419
- EP-A1- 2 103 911
- WO-A2-2011/141167
- DE-A1-102005 038 599
- DE-A1-102007 022 513
- DE-U1-202008 003 584

## Beschreibung

Die Erfindung betrifft einen Flüssigkeitsvolumenstromsensor zur Messung der Geschwindigkeit einer Hauptströmung einer Flüssigkeit in einem Rohrabschnitt, insbesondere in einem Stutzenkanal eines Pumpengehäuses, umfassend ein erstes mit einer Montagebasis verbundenes Gehäuseteil, in dem ein erster Ultraschallsensor aufgenommen ist, ein zweites Gehäuseteil, in dem ein zweiter Ultraschallsensor aufgenommen ist, und zwei sich vom ersten Gehäuseteil weg erstreckende Tragarme, an denen das zweite Gehäuseteil gehalten ist, wobei das zweite Gehäuseteil dem ersten Gehäuseteil unter Ausbildung einer von der Flüssigkeit durchströmbaren Messstrecke beabstandet gegenüber liegt und die beiden Ultraschallsensoren aufeinander ausgerichtet sind.

Derartige Volumenstromsensoren, die auf einer Ultraschallmessung mittels zwei gegenüberliegender Sensoren basieren, sind im Stand der Technik bekannt. So beschreibt beispielsweise die Gebrauchsmusterschrift DE 20 2008 003 584 U1 eine gattungsgemäße Vorrichtung zur Durchflussmessung nach dem Laufzeit- bzw. Time-Of-Flight Durchfluss-Messverfahren (TOF) mit Ultraschallsensoren. Der dort beschriebene Volumenstromsensor wird mittels eines an seiner Basis ausgebildeten Gewindes in die Wandung eines Rohrabschnitts eingeschraubt und ragt in diesem bestimmungsgemäßen Zustand in den Rohrabschnitt hinein. In der Basis ist ein erster Ultraschallsensor aufgenommen, von dem sich zwei gegenüberliegende Tragarme unter Freilassung eines durchströmbaren Bereichs gerade nach vorne, d.h. parallel zur Achse der Basis erstrecken. Am Ende der Tragarme ist zwischen diesen ein zweiter Ultraschallsensor in einem Gehäuse gehalten, das rückseitig von einer die beiden Tragarme verbindenden Kappe verschlossen ist. Die beiden Ultraschallsensoren liegen fluchtend (face-to-face) gegenüber, wobei der freigelassene Bereich zwischen ihnen liegt.

Nachteilig ist bei dem genannten Stand der Technik, dass die beiden Tragarme eine vergleichsweise große Dicke aufweisen. Dies gilt beispielsweise auch für die leistenförmigen Tragarme eines Ultraschall-Volumenstromsensors, wie er aus der deutschen Offenlegungsschrift DE 10 2006 023 479 A1, Figur 1 bekannt ist. Sie reduzieren den von der Flüssigkeit im Rohrabschnitt durchströmbaren Querschnitt erheblich, verursachen zusätzliche Verwirbelungen und bilden einen großen Strömungswiderstand, der zu entsprechenden hydraulischen Verlusten führt, weil die Strömung in Strömungsrichtung ein vergleichsweise großes Hindernis sieht. Zudem sind die Volumenstromsensoren ungeeignet zur Verwendung in Pumpengehäusen, weil dort einerseits im Betrieb erhebliche Turbulenzen auftreten, die die Messung entlang der Messstrecke zwischen den Ultraschallsensoren stark beeinträchtigen, und andererseits aufgrund der baulichen Gegebenheiten keine ausreichend lange Einlaufstrecke realisiert werden kann, um mit Hilfe zusätzlicher Elemente eine Strömungskonditionierung, insbesondere Strömungsberuhigung bis zum Messort zu erreichen.

Ferner ist die Montage des Volumenstromsensors mittels Schraubgewinde nachteilig, weil im vollständig eingeschraubten und dichtend festgezogenen Zustand des Volumenstromsensors die Lage der Tragarme respektive des frei gelassenen Bereichs zwischen ihnen in Bezug auf die Hauptströmung im Rohrabschnitt unbestimmt ist, jedenfalls nicht optimal sein kann. So ist beispielsweise die Gefahr gegeben, dass der Sensor gegenüber der bestimmungsgemäßen Einbaulage um 90° verdreht montiert wird. D.h., dass nicht der freigelassene Bereich in der Strömungsrichtung liegt, sondern vielmehr einer der Tragarme, so dass der freigelassene Bereich hinter diesem Tragarm liegt und gar nicht durchströmt wird. Zwar kann eine korrekte Ausrichtung der Tragarme erreicht werden, jedoch ist dann nicht unbedingt gewährleistet, dass der Volumenstromsensor fest und insbesondere abgedichtet in der Wand des Rohrabschnitts fixiert ist.

Es ist daher Aufgabe der vorliegenden Erfindung, die genannten Nachteile zu überwinden und einen Volumenstromsensor bereitzustellen, der eine Strömungskonditionierung bei minimalem Strömungswiderstand bewirkt und gleichzeitig eine hohe Messgenauigkeit erreicht, und der in einem Pumpengehäuse montiert werden kann.

Diese Aufgabe wird durch einen Flüssigkeitsvolumenstromsensor mit den Merkmalen des Anspruchs 1 gelöst. Vorteilhafte Weiterbildungen des Volumenstromsensor sind in den Unteransprüchen angegeben.

Erfindungsgemäß wird ein Flüssigkeitsvolumenstromsensor der vorgenannten Gattung mit zwei zueinander ausgerichteten Ultraschallsensoren vorgeschlagen, bei dem die beiden Tragarme jeweils in der Form einer die Messstrecke jeweils zu einer Seite hin begrenzenden, strömungsgleichrichtenden Lamelle ausgebildet sind, so dass die Messstrecke abgeschirmt zwischen den beiden Tragarmen liegt.

Eine Lamelle besitzt eine Längserstreckung (Länge), die erheblich größer ist, als die Quererstreckung (Breite), wobei auch seine Quererstreckung deutlich größer ist als die Dicke der Lamelle. Mit anderen Worten ist eine Lamelle vergleichsweise dünn, insbesondere jedenfalls dünner als eine Leiste oder ein Balken als Tragarm, die bzw. der wie ein strömungsbehindernder Block wirkt. Beispielsweise kann das Verhältnis der Länge zur Breite zwischen 1:10 bis 1:40 und das Verhältnis der Dicke zur Breite zwischen 1:5 bis 1:20 betragen.

Die zueinander ausgerichteten Ultraschallsensoren liegen derart, dass ein von einer der beiden Ultraschallsensoren entlang der Messstrecke ausgesendeter Ultraschallimpuls von dem jeweils anderen Ultraschallsensor empfangen werden kann. Als Ultraschallsensoren können Piezowandler verwendet werden, wie sie im Stand der Technik bekannt sind. Diese sind reziproke Bauelemente, die sowohl senden als auch empfangen können, so dass für das Senden und Empfangen eines Ultraschallimpulses keine zwei Bauelemente an einer Seite der Messstrecke vorgesehen werden müssen.

Die Ausbildung der Tragarme als Lamelle hat mehrere technische Wirkungen und Vorteile, jedenfalls bei bestimmungsgemäßer Montage im Rohrabschnitt, so dass die Quererstreckung der Tragarme in einer Ebene liegt, zu der die Hauptströmung parallel verläuft. In diesem Fall sind die Längskanten der Tragarme in Richtung der Hauptströmung orientiert. Aufgrund der geringen Dicke der Lamellen, vorzugsweise zwischen 0,5mm und 1,5mm, bilden die Tragarme für die Strömung einen sehr geringen Strömungswiderstand. Messungen zeigen, dass ein im Pumpengehäuse montierter Flüssigkeitsvolumenstromsensor der erfindungsgemäßen Art im Betrieb des Pumpenaggregats zu keiner Reduzierung des Differenzdrucks zwischen Saug- und Druckseite der Pumpe führt. Dies ist auf die strömungskonditionierende Eigenschaft der lamellenartigen Tragarme zurückzuführen.

Zudem sorgt die im Vergleich zur Dicke große Breite der Tragarme für eine Abschirmung der Messstrecke zu beiden Seite hin. Soweit hier von einer "Seite" die Rede ist, ist damit eine Richtung quer zur Haupströmungsrichtung gemeint. Querströmungen oder zirkulare Strömungen, wie Strömungswirbel, die beispielsweise durch Obstruktionen im Rohrabschnitt entstehen können oder die durch das Ansaugen der Flüssigkeit durch das Laufrad der Pumpe bedingt sind, werden hierdurch von der Messstrecke ferngehalten. Die lamellenförmigen Tragarme bewirken somit eine Strömungsführung und Strömungsgleichrichtung. Die Entstehung zusätzlicher Wirbel an der Längskante der Lamellen wird durch die geringe Dicke minimiert. Der Messbereich zwischen den Tragarmen ist dadurch weitgehend beruhigt und wirbelfrei. Dies verbessert die Messgenauigkeit erheblich und ermöglicht zudem eine Verwendung des erfindungsgemäßen Flüssigkeitsvolumenstromsensors in einem Stutzenkanal eines Pumpengehäuses einer Pumpe. Denn es wird weder eine Einlaufstrecke noch eine Auslaufstrecke für den erfindungsgemäßen Sensor benötigt, um die Strömung zu beruhigen. Gleichzeitig bieten die lamellenartigen Tragarme eine hohe Biegesteifigkeit in Strömungsrichtung, d.h. gute mechanische Stabilität bei gleichzeitiger Vibrationsminimierung.

Des Weiteren bewirkt die Begrenzung der Messstrecke zu zwei Seiten hin aufgrund der lamellenförmigen Tragarme, dass ein Ultraschallimpuls zwischen den Tragarmen geführt wird. Seine Energie wird somit weniger zu den Seiten gestreut. Die Signaldegeneration ist gering. Dies ermöglicht es, Ultraschallsignale mit geringerer Energie auszusenden, ohne die Messgenauigkeit zu vermindern.

Grundsätzlich können die beiden Tragarme eine identische Form und Größe besitzen. Es ist jedoch nicht ausgeschlossen, dass sie je nach Einsatzbereich des erfindungsgemäßen Flüssigkeitsvolumenstromsensors unterschiedlich sind. So kann beispielsweise ein Tragarm länger als der andere Tragarm ausgebildet sein, um den längeren Tragarm mit seinem freien Ende in dem Rohrabschnitt zu befestigen. Auch kann einer der beiden Tragarme eine größere Breite als der andere Tragarm besitzen, z.B. wenn von einer Seite eine größere Abschirmung als von der anderen Seite benötigt wird. Dies kann beispielsweise dann erforderlich werden, wenn auf der einen Seite eine Obstruktion im Rohrabschnitt wie z.B. eine Stufe, Kante, Hinterschneidung oder Ähnliches vorhanden ist. Auch die Dicken können unterschiedlich sein. So kann beispielsweise in dem einen Tragarm ein elektrischer Leiter oder ein mechanisches Verstärkungsmittel einliegen, in dem anderen Tragarm dagegen nicht. Der Tragarm mit dem elektrischen Leiter oder dem Verstärkungsmittel kann dann entsprechend dicker ausgestaltet sein.

Vorzugsweise können der erste Tragarm und die beiden Gehäuseteile oder der erste und der zweite Tragarm und die beiden Gehäuseteile einstückig ausgebildet sein. Hierdurch wird die mechanische Stabilität noch weiter verbessert und es entfällt das Erfordernis, diese Einzelteile zusammen zu bauen. Ferner reduziert sich die Anzahl herzustellender Teile, so dass der Herstellungsprozess vereinfacht und preiswerter wird. Die gesamte Einheit aus Tragarm oder Tragarmen und Gehäuseteilen kann als ein Spritzgussteil aus Kunststoff hergestellt sein.

Idealerweise erstrecken sich die beiden Tragarme vom Randbereich des ersten Gehäuseteils zum Randbereich des zweiten Gehäuseteils. Es steht somit die gesamte Oberfläche des Ultraschallsensors für die Abstrahlung eines Ultraschallimpulses zur Verfügung.

Es ist von Vorteil, wenn die in die Hauptströmungsrichtung zu orientierenden Längskanten der Tragarme abgerundet sind oder eine Schneide bilden. Auf diese Weise wird der Strömungswiderstand des Ultraschallsensors weiter verringert. Die abgerundeten Längskanten können einen Rundungsradius aufweisen, der idealerweise der halben Dicke des entsprechenden Tragarms entspricht. In diesem Fall ist die Abrundung im Querschnitt halbkreisförmig und die Außenfläche einer Längskante geht tangential bündig, d.h. versatzlos in die Seitenflächen über.

Alternativ können die Seitenflächen zur Längskante hin winklig zulaufen, wobei zumindest eine Seitenfläche abknickt und in einem Winkel, insbesondere in einem spitzen Winkel auf die andere Seitenfläche zuläuft. Dies bedeutet, dass die Längskanten im Querschnitt dreieckig sind. Insbesondere können auch beide Seitenflächen eines Tragarms zur Ausbildung der Längskante abknicken und in einem Winkel, insbesondere in einem spitzen Winkel auf einander zulaufen. Dort, wo sich die Seitenflächen in dem Winkel treffen, besitzt die Längskante eines Tragarms dann die Schneide, gegen die die Hauptströmung strömt. Die Tragarme könne in diesem Fall auch als "schwertartig" geformt bezeichnet werden. Je spitzer die Schneide ist, desto geringer ist der hydraulische Widerstand des Volumenstromsensors.

Der erste Tragarm und/ oder der zweite Tragarm können parallel zur Messstrecke verlaufen. Sie besitzen damit stets denselben konstanten Abstand zu einander und zur Messstrecke. Es ist jedoch auch denkbar, dass zum Erhalt einer bestimmten Strömungskonditionierung eine konkave Anordnung der Tragarme zueinander besteht.

Gemäß einer bevorzugten Ausführungsvariante kann sich der erste Tragarm oder können sich der erste und zweite Tragarm vom ersten Gehäuseteil gewölbt zum zweiten Gehäuseteil erstrecken, so dass er an seinen gehäuseteilseitigen Enden bzw. sie an ihren gehäuseteilseitigen Enden den geringsten Abstand zur Messstrecke besitzt/ besitzen. Vorzugsweise liegt der größte Abstand zur Messstrecke im Bereich ihrer axialen Mitte. Hierdurch wird eine verbesserte Impulsführung erreicht.

Geeigneterweise können die Tragarme elastisch sein. Dies ermöglicht es, die Tragarme federnd zur Messstrecke zu drücken. Von Vorteile ist dies beim Einsetzen des Volumenstromsensors durch eine Einsatzöffnung in einem Rohrabschnitt. Ihr Durchmesser müsste grundsätzlich mindestens dem weitesten Abstand der gewölbten Tragarme zueinander entsprechen. Der Durchmesser kann jedoch kleiner gewählt werden, wenn die Tragarme flexibel sind und beim Einsetzen in Richtung der Messstrecke gedrückt werden.

Es ist des Weiteren von Vorteil, wenn die zur Messstrecke gerichtete Innenfläche des ersten und/ oder zweiten Tragarms konkav gewölbt ist. Hierdurch wird ebenfalls eine verbesserte Impulsführung erreicht, da die Energieverteilung eines Impulses im Querschnitt betrachtet einer Gaußverteilung entspricht, die zudem annähernd rotationssymmetrisch ist. Durch die konkave Ausbildung der Innenfläche der Tragarme erfolgt eine Formanpassung an das annähernd kreisförmige Energieverteilungsprofil des Impulses. Dies bewirkt, dass die Form der Energieverteilung während der Bewegung des Impulses entlang der Messstrecke besser erhalten bleibt.

Idealerweise können der erste und/ oder der zweite Tragarm zumindest auf seiner/ ihren von der Messstrecke abgewandten Außenfläche(n) glatt ausgebildet sein, insbesondere im Vergleich zur Innenfläche. In diesem Sinne kann die Außenfläche eine Oberflächenrauhigkeit mit einer Profiltiefe von weniger als 10 µm besitzen. Dies dient der weiteren Reduzierung des Strömungswiderstands des Volumenstromsensors.

Vorzugsweise kann die zur Messstrecke gerichtete Innenfläche des ersten und/ oder zweiten Tragarms eine Ultraschall absorbierende Oberfläche aufweisen, insbesondere im Vergleich zur Außenfläche rau ausgebildet sein. Diese verhindert Reflexionen eines Ultraschallimpulses an den Tragarmen. Infolge einer oder gar mehrerer Reflexionen könnten sich ein Hauptimpuls und ein oder mehrere reflektierten Impulse am empfangenden Ultraschallsensor überlagern, wodurch das Messsignal verfälscht und die Berechnung der Strömungsgeschwindigkeit ungenau wird. Eine Ultraschall absorbierende Oberfläche auf der Innenseite der Tragarme verhindert dies.

Die Ultraschall absorbierende Oberfläche kann durch eine Mikrostrukturierung des entsprechenden Tragarms oder durch eine Beschichtung erreicht werden, die eine entsprechende Oberflächenrauhigkeit aufweist, beispielsweise in der Art einer Beschichtung mit Lotus-Effekt. Durch die Mikrostrukturierung oder die raue Oberflächenbeschichtung werden die Ultraschallimpulse an der Innenfläche des/ der Tragarme in alle Richtungen gestreut, so dass es nicht zu einer gerichteten Reflexion kommt.

Die Ultraschallsensoren müssen zur Erreichung Ihrer Funktionsfähigkeit prinzipbedingt elektrisch bestromt respektive ihr Sensorsignal einer Auswerteeinheit zugeführt werden. Hierzu sind elektrische Leitungen erforderlich. Zur elektrischen Kontaktierung des zweiten Ultraschallsensors können daher in oder auf zumindest einem der beiden Tragarme elektrische Leiter verlaufen. Vorzugsweise verläuft in oder auf jedem der beiden Tragarme jeweils ein elektrischer Leiter. Dies hat den Vorteil, dass eine symmetrische Gewichtsverteilung der Tragarme erreicht wird. Zudem haben die beiden elektrischen Signalwege dieselbe Länge, so dass es zu keiner Laufzeitverzögerung der Messsignale kommt. Die Enden der elektrischen Leiter kontaktieren den zweiten Ultraschallsensor vorzugsweise symmetrisch an zwei sich gegenüberliegenden Seiten, die idealerweise zu den beiden Tragarmen gerichtet sind.

Es ist von besonderem Vorteil, wenn die elektrischen Leiter vollumspritzt in dem einen oder in beiden Tragarmen eingebettet sind. Dies kann während der Herstellung des Volumenstromsensors im Kunststoffspritzgussverfahren erfolgen. Man erhält dadurch ein integrales Teil, das lediglich noch mit den Ultraschallsensoren bestückt werden muss. Es entfällt dadurch die Notwendigkeit, einen elektrischen Leiter durch einen sich in dem entsprechenden Tragarm längs erstreckenden Hohlraum zu fädeln, wie dies beim genannten Stand der Technik DE 20 2008 003 584 U1 erforderlich ist. Dies ist aufwändig und kann bei fehlender Steifigkeit des Leiters, beispielsweise bei Verwendung eines feindrähtigen Kabels, aufgrund der Länge des Tragarms schwierig sein.

Die elektrischen Leiter können durch Flachstäbe oder Rundstäbe gebildet sein. Sie liegen dann durch den die Tragarme bildenden Kunststoff isoliert in den Tragarmen ein, so dass auf eine zusätzliche Kunststoffummantelung, wie sie Kabel typischerweise haben, verzichtet werden kann. Gleichwohl sind die elektrischen Leiter durch die Einbettung in den Tragarmen vor Korrosion geschützt. Zudem können Flach- und Rundstäbe gut an eine bestimmte Form angepasst werden, beispielsweise indem der entsprechende Flach- oder Rundstab an geeigneter Stelle gebogen oder geknickt und auf diese Weise sein Verlauf definiert wird.

Alternativ zu massiven Stäben in runder oder flacher Form können die elektrischen Leiter durch metallische Leiterbahnen auf der Oberfläche eines oder beider Tragarme gebildet sein. Diese können beispielsweise mittels der im Stand der Technik hinlänglich bekannten MID-Technik (Molded Interconnect Device) hergestellt sein. Dabei wird z.B. ein Metallpartikel enthaltender Kunststoff mittels Laserstrahl entlang der herzustellenden Leiterbahn erhitzt, so dass der Kunststoff verdampft und die Metallpartikel aufgeschmolzen werden. Diese geschmolzenen Partikel verbinden sich dann und bilden die metallische Leiterbahn aus.

Vorzugsweise erstrecken sich die elektrischen Leiter von dem zweiten Ultraschallsensor unterbrechungsfrei bis zu einem elektrischen Anschlusselement in der Montagebasis, wobei sie vorzugsweise zumindest teilweise in der Wand der Montagebasis verlaufen, insbesondere dort eingebettet sind. Unterbrechungsfrei bedeutet in diesem Sinn, dass zwischen dem zweiten Ultraschallsensor und dem Anschlusselement keine zwei miteinander verbundenen elektrischen Leiter einen Signalweg bilden, da dies die Qualität der Übertragung des elektrischen Signals beeinträchtigen könnte. Der unterbrechungsfreie Verlauf des oder der elektrischen Leiter vom zweiten Ultraschallsensor durch den entsprechenden Tragarm und durch die Wand der Montagebasis zum Anschlusselement kann durch entsprechende Formgebung des elektrischen Leiters erreicht werden, d.h. durch einen mehrwinkligen Verlauf entsprechend der Querschnittsform von Tragarm und Montagebasis des Volumenstromsensors.

Idealerweise können auch zwei elektrische Leiter zur Kontaktierung des ersten Ultraschallsensors zumindest teilweise in der Wand der Montagebasis verlaufen, insbesondere dort eingebettet sein. In diesem Fall ist es vorteilhaft, wenn diese den ersten Ultraschallsensor kontaktierenden elektrischen Leiter ebenfalls mit dem elektrischen Anschlusselement verbunden sind. Hierdurch wird das elektrische Anschließen beider Sensoren erleichtert.

Bevorzugt verlaufen die den ersten Ultraschallsensor kontaktierenden elektrischen Leiter in der Wand der Montagebasis bezogen auf die Achse der Montagebasis um 90° versetzt zu den den zweiten Ultraschallsensor kontaktierenden elektrischen Leitern. Die elektrischen Leiter besitzen dadurch einen größtmöglichen Abstand zu einander, so dass eine gute Isolation erreicht wird. Zudem erhält die Montagebasis einen annähernd symmetrischen Aufbau.

Das Prinzip der Laufzeit- bzw. Time-Of-Flight Messung in Flüssigkeiten mittels Ultraschallsensoren basiert auf der Erkenntnis, dass ein Ultraschallimpuls mit der Strömung quasi "mitschwimmt". Die Ausbreitungsgeschwindigkeit des Impulses und die Strömungsgeschwindigkeit der Flüssigkeit addieren sich vektoriell. Aus diesem Grunde ist ein in Richtung der Strömungsgeschwindigkeit ausgesendeter Impuls schneller als ein Impuls, der entgegen der Strömung ausgesendet wird. Aus dem Laufzeitunterschied dieser beiden Ultraschallimpulse kann in bekannter Weise die Strömungsgeschwindigkeit ermittelt werden. Um das TOF-Prinzip zu nutzen, muss die Messstrecke deshalb in einem Winkel ungleich 90° zur Hauptströmungsrichtung liegen, da es bei einem rechten Winkel nicht zu einem Laufzeitunterschied kommt. Der Laufzeitunterschied wäre maximal, wenn die Messstrecke parallel zur Hauptströmung ausgerichtet wäre. Jedoch würde in diesem Fall der Bereich zwischen den Tragarmen nicht mehr durchströmt werden, weil der erste Sensor vor diesem Bereich läge und ihn beschatten würde. Es ist daher von Vorteil, den Volumenstromsensor derart in dem Rohrabschnitt anzuordnen, dass die Messstrecke in einem Winkel im Bereich zwischen 30° und 60° zur Hauptströmungsrichtung liegt.

Die Tragarme können sich grundsätzlich gerade von der Montagebasis weg erstrecken, wie dies auch im Stand der Technik gemäß DE 20 2008 003 584 U1 gezeigt ist. Dies bedeutet, dass die Längserstreckung der Tragarme parallel zur Achse der Montagebasis liegt. In diesem Fall muss der gesamte Volumenstromsensor in dem entsprechenden Winkel in den Rohrabschnitt eingebaut werden, in dem die Messstrecke bezogen auf die Hauptströmungsrichtung liegen soll. Der Volumenstromsensor ragt dann im Falle eines geraden Rohrabschnitts schräg bezogen auf die Rohrachse in diesen Rohrabschnitt hinein und in der Regel außen aus dem Rohrabschnitt auch schräg heraus. Dies ist im Hinblick auf den Montageprozess des Sensors nachteilig, insbesondere wenn weitere Komponenten aus einer anderen Richtung zusammengefügt oder bearbeitet werden müssen. Als Beispiel sei hier ein Pumpengehäuse genannt, bei dem der Saugstutzenkanal oder der Druckstutzenkanal den genannten Rohrabschnitt bildet, in den der erfindungsgemäße Flüssigkeitsvolumenstromsensor zu montieren ist. Hier wird eine elektromotorische Antriebseinheit oder ein Getriebe, deren/ dessen Antriebsachse das Laufrad der Pumpe trägt, an das Pumpengehäuse angeflanscht. Die hierbei vorliegende Fügerichtung ist häufig im Wesentlichen senkrecht zur Achse des Saug- und/ oder Druckstutzens. Ein Flüssigkeitsvolumenstromsensor der erfindungsgemäßen Gattung mit gerade abstehenden Tragarmen muss gegenüber der Antriebseinheit oder dem Getriebe aus einer anderen Fügerichtung in das Pumpengehäuse eingesetzt werden. Der Herstellungsprozess wird dadurch verkompliziert.

Zur Vermeidung dieses Nachteils wird vorgeschlagen, dass die Tragarme mindestens zwei gerade Teilabschnitte aufweisen, die in einem Winkel α zueinander liegen. Insbesondere kann sich zumindest einer der Teilabschnitte in einem Winkel α zu einer horizontalen Achse der Montagebasis in Richtung des zweiten Gehäuseteils erstrecken. Dies bedeutet, dass auch die Messstrecke in einem Winkel zu der Achse der Montagebasis liegt. Hierdurch wird erreicht, dass der Volumenstromsensor einerseits aus derselben Richtung in den Stutzenkanal eingefügt werden kann, wie die Antriebseinheit oder das Getriebe an das Pumpengehäuse gefügt werden. Andererseits liegt die Messstrecke dennoch winklig zur Hauptströmung, um eine TOF-Messung durchführen zu können. Der Winkel α kann beispielsweise zwischen 120° und 150° betragen.

Alternativ können sich die Tragarme oder kann sich zumindest ein Teil der beiden Tragarme bogenförmig unter Beibehaltung eines konstanten Abstandes zur Messstrecke vom ersten Gehäuseteil in Richtung des zweiten Gehäuseteils erstrecken. Hierdurch wird ebenfalls erreicht, dass der Volumenstromsensor mit seiner Basis aus derselben Richtung gefügt werden kann, wie die Antriebseinheit oder das Getriebe, und die Messstrecke dennoch winklig zur Hauptströmung liegt, um eine TOF-Messung durchführen zu können.

In einer vorteilhaften Weiterbildung des erfindungsgemäßen Flüssigkeitsvolumenstromsensors kann diese zumindest einen Temperatursensor enthalten. Der Temperatursensor kann im ersten Gehäuseteil (Base), im zweiten Gehäuseteil (Cap), und/ oder in einem der Tragarme ein Temperatursensor angeordnet sein und zur Messung der Temperatur der geförderten Flüssigkeit dienen. Hiermit kann auf einen separat zu montierenden Temperatursensor im Rohrabschnitt verzichtet werden, der zu einem zusätzlichen konstruktiven Herstellungs- und Montageaufwand führen würde. Der Temperatursensor kann in bekannter Weise ein PTC-Widerstand (Positive Temperatur Coefficient) oder ein Platin-Messwiderstand sein. Sofern der Temperatursensor in einem der Tragarme angeordnet ist, kann die Anordnung nah der Montagebasis, mittig oder am Ende des Tragarms nah dem zweiten Gehäuseteil sein.

Um zu erreichen, dass der Volumenstromsensor respektive seine Messstrecke im Rohrabschnitt bezogen auf die Hauptströmungsrichtung stets richtig ausgerichtet ist, wird vorgeschlagen, die Montagebasis gewindefrei auszuführen, d.h. nicht mittels Gewinde in den Rohrabschnitt einzusetzen. So kann die Montagebasis in eine Einsatzöffnung des Rohrabschnitts einsteckbar befestigbar sein. Hierzu kann die Montagebasis einen Flansch aufweisen, mittels welchem der Volumenstromsensor von außen an dem Rohrabschnitt befestigt werden kann.

Vorzugsweise weist die Montagebasis eine zweifach, insbesondere dreifach abgestufte Außenkontur auf. Dies gewährleistet einen dichten Sitz des Volumenstromsensors in der Einsatzöffnung des Rohrabschnitts.

Der Flansch kann zwei, drei oder vier Befestigungspunkte aufweisen. Idealerweise sind die Befestigungspunkte des Flanschs durch Bohrungen gebildet, durch die sich jeweils eine Schraube zur Befestigung des Volumenstromsensors am Rohrabschnitt hindurch erstrecken kann. Alternativ kann die Montagebasis einen Bajonettverschluss aufweisen. Der Montageprozess wird dadurch erheblich vereinfacht und beschleunigt.

Der erfindungsgemäße Flüssigkeitsvolumenstromsensor kann in besonders geeigneter Weise in einem Pumpengehäuse eines Pumpenaggregats mit einer Pumpenkammer zur Aufnahme eines von einer Antriebseinheit antreibbaren Laufrads, einem in diese mündenden Saugstutzenkanal und einem von dieser abgehenden Druckstutzenkanal verwendet werden, wobei er im Saugstutzenkanal oder Druckstutzenkanal derart angeordnet werden kann, dass die beiden Ultraschallsensoren bezogen auf die Hauptströmungsrichtung dann versetzt zueinander liegen. Ein derartiges Pumpengehäuse, beispielsweise einer elektromotorischen Heizungs- oder Trinkwasserpumpe, kann derart aufgebaut sein, dass sein Saug- und Druckstutzen in-line zueinander stehen, d.h. koaxial ausgerichtet sind. Ein derartiges Pumpengehäuse mit einem erfindungsgemäßen Flüssigkeitsvolumenstromsensor ist ebenfalls Gegenstand der vorliegenden Erfindung.

Die Wand des Saugstutzens oder des Druckstutzens weist vorzugsweise eine Einsatzöffnung auf, die von einem Montageflansch umgeben ist, an dem der Flansch der Montagebasis des Volumenstromsensors im montierten Zustand anliegt und befestigt ist.

Vorzugsweise erstreckt sich der Volumenstromsensor von der der Antriebseinheit oder dem Getriebe zugewandten Seite durch die Einsatzöffnung in der Stutzenwand in den Saugstutzenkanal oder den Druckstutzenkanal hinein, so dass der Volumenstromsensor von derselben Seite aus montiert werden kann, wie die Antriebseinheit bzw. das Getriebe an das Pumpengehäuse gefügt werden muss. Sofern jedoch nicht genügend Platz vorhanden ist, um den Volumenstromsensor auf der zu der Antriebseinheit oder dem Getriebe gerichteten Seite des Stutzenkanals zwischen Pumpengehäuse und Saug- oder Druckstutzen zu montieren, kann der Volumenstromsensor auch aus einer beliebigen anderen Richtung in den Saug- oder Druckstutzenkanal eingesetzt werden, insbesondere aus Richtung der Antriebseinheit bzw. des Getriebes gesehen seitlich oder hinter dem Pumpengehäuse.

Gemäß einer Weiterbildung kann eine horizontale Achse der Montagebasis parallel zur Antriebsachse des Laufrads verlaufen. Dies bedeutet, dass die Flanschfläche des Montageflansches planparallel zur Stirnseite einer Montagefläche des Pumpengehäuses ist, an die die Antriebseinheit oder das Getriebe anzusetzen ist. Hierdurch wird erreicht, dass der Volumenstromsensor nicht nur von derselben Seite aus sondern auch aus derselben Richtung wie die Antriebseinheit bzw. das Getriebe mit dem Pumpengehäuse zusammengefügt werden kann. Dies erleichtert den Montageprozess.

Die beiden Gehäuseteile des Volumenstromsensors können in jeweils einer Ausnehmung in einer den Saugstutzenkanal oder Druckstutzenkanal begrenzenden Wand einliegen. Sie sind damit nicht unmittelbar der Strömung ausgesetzt, welche dann lediglich die Längskanten der Tragarme sieht. Die Einsatzöffnung in der Wand des Stutzenkanals mündet in die das erste Gehäuseteil aufnehmende Ausnehmung hinein.

Es ist jedoch auch möglich, dass sich der Volumenstromsensor durch die Einsatzöffnung in der Stutzenwand in den Saugstutzenkanal oder den Druckstutzenkanal hinein erstreckt und im Saug- oder Druckstutzenkanal endet. Dies bedeutet, dass das zweite Gehäuseteil frei in der Strömung liegt und nicht in einer Ausnehmung in der Wand des Stutzenkanals einliegt. Hierdurch kann eine Teilströmung in dem Rohrabschnitt gemessen werden. Dies ist von besonderem Vorteil, weil die Strömung im Stutzenkanal aufgrund seiner Krümmung und der Rückwirkung des Pumpenlaufrades nicht laminar ist. Im Allgemeinen ist die Strömung am Rand des Stutzenkanals ruhiger, d.h. weniger turbulent als in der Mitte der Stutzenkanals, wo es Turbulenzen und gegebenenfalls auch Toträume, d.h. strömungslose Bereiche gibt. Das Messen der Strömung in einem Teilbereich, insbesondere am Rand des Rohrabschnitts bzw. des Stutzenkanals, wo die Strömung harmonischer ist, als in der Mitte verbessert deutlich die Messgenauigkeit.

Weitere Merkmale und Vorteile der Erfindung werden nachfolgend anhand von Ausführungsbeispielen und den beigefügten Figuren näher beschrieben. Es zeigen:
- Figur 1:: Perspektivische Darstellung einer ersten Variante des Volumenstromsensors
- Figur 2:: Seitenansicht der ersten Ausführungsvariante des erfindungsgemäßen Flüssigkeitsvolumenstromsensors
- Figur 3:: Draufsicht der ersten Variante des Volumenstromsensor
- Figur 4:: Vertikalschnitt durch die erste Variante des Volumenstromsensors
- Figur 5:: Horizontalschnitt durch die erste Variante des Volumenstromsensors
- Figur 6:: Vertikalschnitt durch ein Pumpengehäuse mit darin montiertem Volumenstromsensor gemäß Figur 1
- Figur 7:: Diagonalschnitt durch das Pumpengehäuse gemäß Figur 6 mit darin montiertem Volumenstromsensor gemäß Figur 1
- Figur 8:: Perspektivische Ansicht einer zweiten Variante des Volumenstromsensors
- Figur 9:: Draufsicht der zweiten Variante des Volumenstromsensors
- Figur 10:: Vertikalschnitt durch ein Pumpengehäuse mit darin montiertem Volumenstromsensor gemäß Figur 8
- Figur 11:: Diagonalschnitt durch das Pumpengehäuse mit darin montiertem Volumenstromsensor gemäß Figur 8

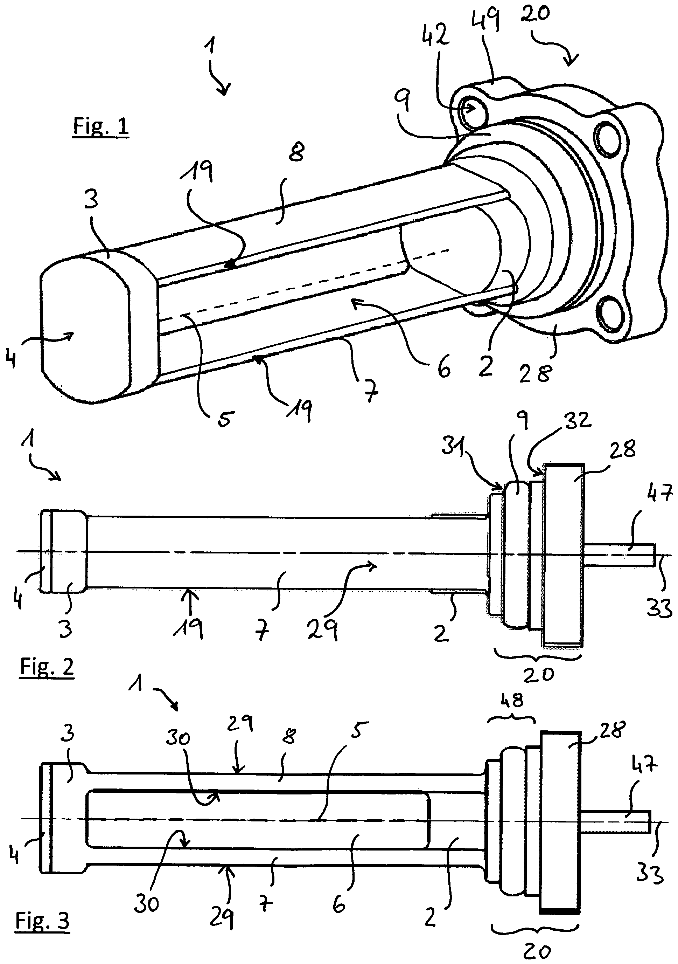

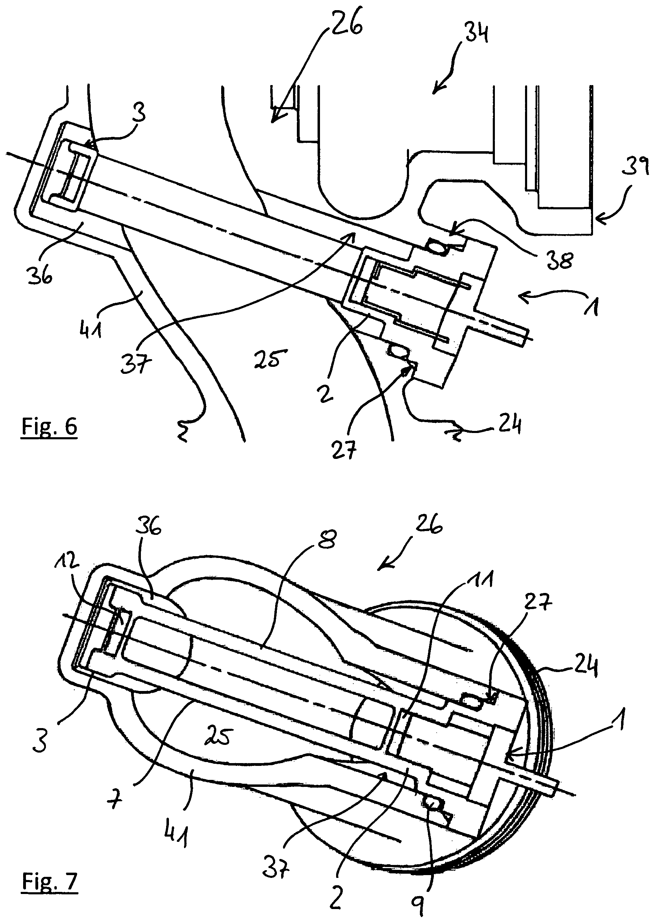

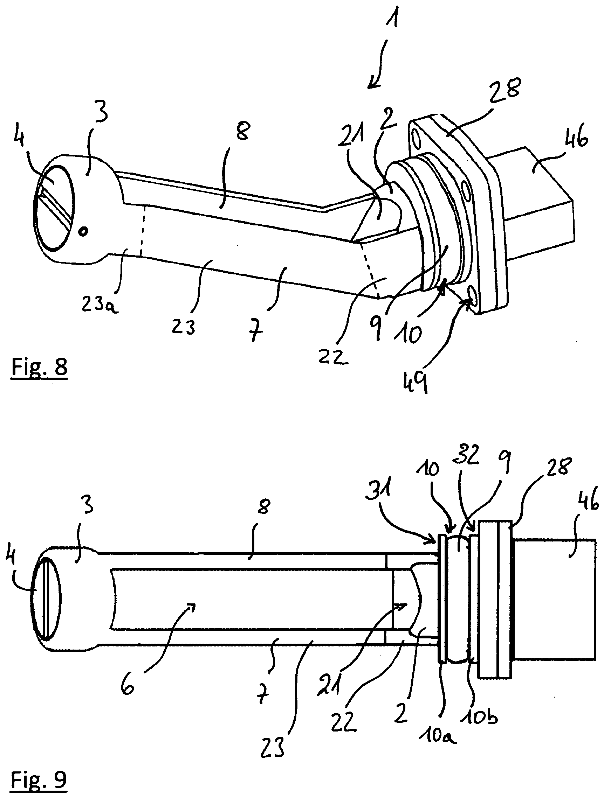

Figuren 1 bis 5 zeigen einen Volumenstromsensor 1 gemäß einer ersten Ausführungsvariante zur Messung der Geschwindigkeit einer Hauptströmung in einer Flüssigkeit in einem Rohrabschnitt, insbesondere in einem Stutzenkanal 25 eines Pumpengehäuses 26 (siehe Figuren 6 und 7). Figuren 8 und 9 zeigen einen Volumenstromsensor gemäß einer zweiten Ausführungsvariante. Schließlich zeigen Figuren 6, 7 und 10, 11 jeweils Pumpengehäuse 26 mit einem darin montierten Volumenstromsensor 1.

Der Volumenstromsensor 1 gemäß Figuren 1 bis 5 umfasst ein erstes mit einer Montagebasis 20 verbundenes Gehäuseteil 2, ein zweites Gehäuseteil 3 und zwei sich vom ersten Gehäuseteil 2 weg erstreckende Tragarme 7, 8, an deren Enden das zweite Gehäuseteil 3 gehalten ist. Das zweite Gehäuseteil 3 liegt dem ersten Gehäuseteil 2 unter Ausbildung eines von der Flüssigkeit durchströmbaren Freiraums 6 beabstandet gegenüber. Eine Messstrecke 5 erstreckt sich zwischen den Gehäuseteilen 2, 3 längs dieses durchströmbaren Freiraums 6. Die beiden Tragarme 7, 8 erstrecken sich vom ersten Gehäuseteil 2 gerade weg, so dass ihre Längserstreckung parallel zur Achse 33 der Montagebasis 20 liegt.

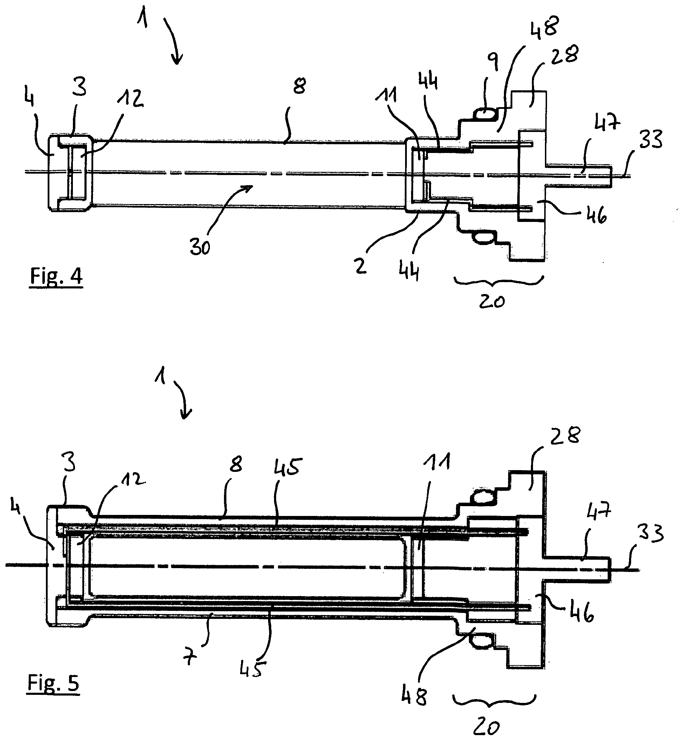

Wie aus den Figuren 4 und 5 zu erkennen ist, ist in dem ersten Gehäuseteil 2 ein erster Ultraschallsensor 11 aufgenommen. Ferner liegt in dem zweiten Gehäuseteil 3 ein zweiter Ultraschallsensor 12 ein. Die Ultraschallsensoren 11, 12 sind hier als Piezo-Wandler realisiert. Sie weisen eine Scheibenform auf und sind in den beiden Gehäuseteilen 2, 3 formschlüssig aufgenommen. Jeder der Ultraschallsensoren 11,12 kann sowohl einen Ultraschallimpuls aussenden als auch einen solchen detektieren, sie sind also reziprok. Ferner sind sie derart aufeinander ausgerichtet (face-to-face), dass ein von einem der beiden Ultraschallsensoren 11, 12 entlang der Messstrecke 5 ausgesendeter Ultraschallimpuls von dem jeweils anderen Ultraschallsensor 11, 12 empfangen werden kann.

Die beiden Tragarme 7, 8 sind jeweils in Form einer Lamelle ausgebildet, wobei jeder Tragarm 7, 8 den Freiraum 6 und damit die Messstrecke 5 zu einer Seite hin begrenzt. Dies bedeutet, dass der längliche Freiraum 6 zu vier Seiten begrenzt ist, nämlich jeweils durch die Stirnflächen der Gehäuseteile 2, 3 und durch die Innenflächen 30 der Tragarme 7, 8. Die Quererstreckung der Tragarme 7, 8 liegt im bestimmungsgemäß montierten Zustand des Volumenstromsensors 1 jeweils in einer Ebene, zu der die Hauptströmung im Stutzenkanal 25 parallel verläuft.

Wie in den Figuren 1 bis 5 ersichtlich ist, ist die Längserstreckung der Tragarme 7, 8 um ein vielfaches größer als ihre Quererstreckung, wobei die Quererstreckung, d.h. die Breite der Tragarme 7, 8, wiederum um ein mehrfaches größer als ihre Dicke ist.

Die beiden Gehäuseteile 2, 3, die beiden Tragarme 7, 8 und die Montagebasis 20 sind einstückig aus Kunststoff spritzgegossen, so dass eine hohe Stabilität und Integrität des Volumenstromsensors 1 erreicht wird und keine Montage der einzelnen genannten Teile erforderlich ist. Das erste und zweite Gehäuseteil 2, 3 begrenzen jeweils einen Aufnahmeraum, in dem der jeweilige Ultraschallsensor 11, 12 einliegt. Auf der dem Freiraum 6 abgewandten Seite des zweiten Gehäuseteils 3 ist sein entsprechender Aufnahmeraum durch eine Kappe 4 flüssigkeitsdicht verschlossen. Ein dichter Verschluss des Aufnahmeraums für den zweiten Ultraschallsensor 12 ist erforderlich, da das zweite Gehäuseteil 3 von der Flüssigkeit umgeben ist. Der Aufnahmeraum des ersten Gehäuseteils 2 ist ebenfalls verschlossen, wie nachfolgend noch erläutert wird.

Die beiden Tragarme 7, 8 erstrecken sich jeweils von den Randbereichen des ersten Gehäuseteils 2 zu den korrespondierenden Randbereichen des zweiten Gehäuseteils 3. Hierzu weisen die Gehäuseteile 2, 3 eine im Wesentlichen identische Außenform in Gestalt eines Zylinders auf, die konzentrisch zueinander liegen, wobei die Messtrecke 5 die beiden Zylinderachsen miteinander verbindet. Die beiden Tragarme 7, 8 sind jeweils einstückig mit der Mantelfläche des ersten und zweiten zylindrischen Gehäuseteils 2, 3 ausgebildet. Hierdurch wird erreicht, dass die gesamte Abstrahlfläche der Ultraschallsensoren 11, 12 nutzbar, d.h. durch die Tragarme 7, 8 nicht behindert wird. Vielmehr bewirken die Tragarme 7, 8 in vorteilhafter Weise, dass die Messstrecke 5 bzw. die Strömung im Freiraum 6 zu den Seiten hin geschützt ist, d.h. Turbulenzen wie Querströmungen oder Wirbel von der Messstrecke 5 ferngehalten werden.

Zusätzlich zu der Eigenschaft der Lamellenform der Tragarme 7, 8, die Messstrecke 5 abzuschirmen, bewirkt die in Richtung der Hauptströmung jeweils orientierte Längsseite 19 der Tragarme 7, 8, dass der Volumenstromsensor 1 in Strömungsrichtung einen sehr geringen Strömungswiderstand bildet. Um diesen gering zu halten, sind die Längskanten 19 abgerundet. Weiter minimieren kann man den Strömungswiderstand dadurch, dass die Längskanten 19 der Tragarme 7, 8 eine Schneide bilden, d.h. die beiden Seitenflächen der Tragarme 7, 8 in einem Winkel zueinander verlaufen. Je spitzer hierbei der Winkel ist, umso geringer ist der durch den Volumenstromsensor 1 in der Strömung gebildete Strömungswiderstand.

Wie aus Figur 2 deutlich wird, verlaufen die beiden Tragarme 7, 8 parallel zur Messstrecke 5. Gemäß einer nicht dargestellten alternativen Ausführungsvariante ist es jedoch auch möglich, dass sich die beiden Tragarme 7, 8 vom ersten Gehäuseteil 2 derart gewölbt zum zweiten Gehäuseteil 3 erstrecken, dass sie an ihren jeweiligen gehäuseteilseitigen Enden den geringsten Abstand zur Messstrecke 5 besitzen, d.h. in einem mittleren Bereich zwischen den beiden Gehäuseteilen 2, 3 einen bauchig zur Seite vorstehenden Abschnitt aufweisen. Hierdurch ist es möglich, die Formänderung und Ausbreitung eines Ultraschallimpulses zu beeinflussen, insbesondere zu konditionieren. Um den Volumenstromsensor 1 mit gewölbten Tragarmen 7, 8 dennoch durch eine vergleichsweise kleine Einsatzöffnung 27 im Stutzenkanal 25 einsetzen zu können, sind die Tragarme 7, 8 vorteilhafterweise flexible, so dass sie zueinander gedrückt werden können, um die Breite des Volumenstromsensors 1 im Bereich der Tragarme 7, 8 zu reduzieren.

Figur 4 zeigt einen horizontalen Schnitt des erfindungsgemäßen Flüssigkeitsvolumenstromsensors 1 entlang der Messstrecke 5, so dass der Blick frei auf die zur Messstrecke 5 gerichtete Innenfläche 30 des Tragarms 8 ist. Gemäß einer nicht dargestellten Variante kann diese Innenfläche des ersten Tragarms 7 und/oder des zweiten Tragarms 8 konkav gewölbt sein. Dies verbessert die Führung eines Ultraschallimpulses, dessen Energieverteilung bekanntlich einem halben Rotationsparaboloiden, d.h. einer rotationssymmetrischen Gaußverteilung entspricht und damit an ihrer Peripherie annähernd rund ausgebildet ist.

Zusätzlich kann die Innenfläche 30 eine ultraschallabsorbierende Oberfläche aufweisen. Dies verhindert Reflektionen an der Innenfläche, die die Auswertung des Messsignals des ersten bzw. zweiten Ultraschallsensors 11, 12 erschweren können. Die ultraschallabsorbierende Oberfläche kann durch Mikrostrukturierung des entsprechenden Tragarms 7, 8 auf mechanische oder chemische Weise erfolgen oder durch das Aufbringen einer Beschichtung, so dass eine Oberflächenrauhigkeit erhalten wird, deren durchschnittliche Tiefe insbesondere im Bereich der Wellenlänge der Ultraschallimpulse liegt.

Zusätzlich kann die der Messstrecke abgewandte Außenfläche 29 des ersten Tragarms 7 und/oder des zweiten Tragarms 8 glatt ausgebildet sein. Dies reduziert die hydraulische Reibung des Volumenstromsensors 1 mit der Flüssigkeit.

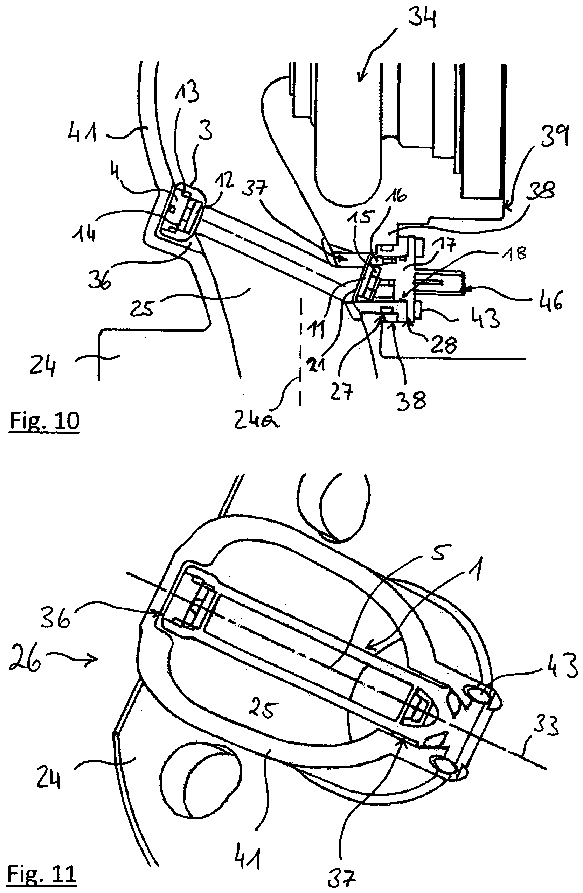

Wie aus Figur 4 noch zu erkennen ist, sind zwei elektrische Leiter 44 vorhanden, die an der Innenwand der Montagebasis 20 verlaufen. Sie erstrecken sich mit einem Ende in ein elektrisches Anschlusselement 46 hinein, dass in den Figuren 1 bis 7 lediglich schematisch dargestellt ist. Bei dem Anschlusselement 46 kann es sich um eine Kontaktzone handeln, in der die Enden eines Anschlusskabels 47 mit den Enden der elektrischen Leiter 44, 45 verbunden, insbesondere verlötet sind. Diese Kontaktzone kann samt Kabelende mit einem Kunststoff vergossen sein. Alternativ kann das Anschlusselement eine Steckerleiste oder Buchsenleiste sein, wie es in Figur 10 dargestellt ist, die durch einen korrespondierenden Stecker oder eine korrespondierende Buchse am Ende eines Anschlusskabels kontaktiert werden kann.

Das andere Ende der elektrischen Leiter 44 kontaktiert den ersten Ultraschallsensor 11 im ersten Gehäuseteil 2. Sie verlaufen dort ebenfalls innenseitig des ersten Gehäuseteils 2. Die elektrischen Leiter 44 können gemäß einer nicht dargestellten Ausführungsvariante auch in der Wand der Montagebasis 20 und/ oder des ersten Gehäuseteils 2 verlaufen, d.h. in diese eingebettet sein.

Figur 5 zeigt zwei weitere elektrische Leiter 45, die sich längsseits in den Tragarmen 7, 8 erstrecken und in dem die Tragarme 7, 8 bildenden Kunststoff eingebettet sind.

Diese zweiten elektrischen Leiter 45 sind an einem Ende ebenfalls mit dem elektrischen Anschlusselement 46 verbunden und kontaktieren an ihrem anderen Ende den zweiten Ultraschallsensor 12. Ein Vergleich der Figur 4 mit Figur 5 macht verständlich, dass die ersten beiden elektrischen Leiter 44 und die zweiten beiden elektrischen Leiter 45 in der Montagebasis 20 um 90° versetzt zueinander bezogen auf die Achse 33 der Montagebasis 20 liegen.

Die zweiten elektrischen Leiter 45 können durch Rundstäbe oder Flachstäbe gebildet sein und verleihen damit dem gesamten Volumenstromsensor 1 zusätzlich an Stabilität. Figur 5 zeigt ferner, dass die zweiten elektrischen Leiter 45 von dem zweiten Ultraschallsensor 12 unterbrechungsfrei bis zu dem elektrischen Anschlusselement 46 in der Montagebasis 20 verlaufen. Es gibt folglich abgesehen von der Kontaktierung des zweiten Ultraschallsensors 12 und des elektrischen Anschlusselements 46 keine Kontaktbrücke zwischen dem Ultraschallsensor 12 und dem elektrischen Anschlusselement 46, die die Messgenauigkeit ggf. beeinflussen könnte.

Die in den Figuren 1 bis 5 dargestellte Montagebasis 20 des erfindungsgemäßen Flüssigkeitsvolumenstromsensors 1 besitzt einen zweistufig ausgebildeten Sockel 48, an den sich rückseitig ein Flansch 28 anschließt und vorderseitig das erste Gehäuseteil 2 anschließt. Das erste Gehäuseteil 2, der Sockel 48 und der Flansch 28 liegen koaxial zueinander und sind einstückig spritzgegossen hergestellt. Der Sockel 48 steht in radialer Richtung über das zweite Gehäuseteil 2 hervor, springt allerdingst gegenüber dem Flansch 28 zurück. Der Sockel 48 bildet eine erste Stufe 31 aus, auf der ein Dichtring 9 aufliegt. Hinter dem Dichtring 9 erhebt sich eine zweite Stufe 32, an die sich der Flansch 28 anschließt, der gegenüber der zweiten Stufe 32 ebenfalls radial vorsteht. Erste und zweite Stufe 31, 32 bilden somit eine erste Kehle, die zweite Stufe 32 und der Montageflansch 28 bilden eine zweite Kehle. Die mehrstufige Ausbildung der Außenkontur der Montagebasis 20 sorgt für einen dichten Sitz des erfindungsgemäßen Flüssigkeitsvolumenstromsensors im Rohrabschnitt 25.

In der Ausführungsvariante gemäß der Figuren 1 bis 5 ist der Flansch 38 der Montagebasis 20 mit vier Befestigungspunkten ausgeführt, die hier durch Bohrungen 42 gebildet sind. Diese Bohrungen 42 sind in radialen Vorsprüngen 49 vorhanden. Durch die Bohrungen 42 können Schrauben 43 (siehe Figur 10) eingesetzt werden, um den Volumenstromsensor 1 am Rohrabschnitt 25zu befestigen. Die Montagebasis 20 ist dementsprechend gewindefrei ausgeführt. Sie kann in eine Einsatzöffnung 27 des Rohrabschnitts 25eingesteckt werden, siehe Figur 6, und dort mittels durch die Bohrungen 42 hindurch gesteckten Schrauben 43 befestigt werden.

Innerhalb der Montagebasis 20 kann ein Temperatursensor angeordnet sein. Dieser kann alternativ auch im ersten Gehäuseteil 2 oder zweiten Gehäuseteil 3 vorne angeordnet sein. Der Temperatursensor ist vorzugsweise ein PTC oder Platin-Element, der an der Innenseite der Wand der Montagebasis anliegt. Der Temperatursensor misst die Temperatur der strömenden Flüssigkeit. Seine elektrischen Anschlüsse können ebenfalls an das elektrische Anschlusselement 46 geführt sein. Somit sind alle elektrischen Anschlüsse der Ultraschallsensoren 11, 12 und des Temperatursensors gemeinsam in dem elektrischen Anschlusselement 46 kontaktierbar, so dass lediglich eine einzige elektrische Schnittstelle bei dem Volumenstromsensor 1 vorhanden ist.

Figur 6 zeigt einen vertikalen Schnitt durch ein Pumpengehäuse 26. Das Pumpengehäuse 26 weist eine Pumpenkammer 34, einen Saugstutzen 24 und einen nicht dargestellten Druckstutzen auf. Ein Saugstutzenkanal 25 verläuft vom Saugstutzen 24 zur Pumpenkammer 34 und mündet in diese hinein. Ein nicht dargestellter Druckstutzenkanal geht von der Pumpenkammer 34 zum Druckstutzen ab.

In der den Saugstutzenkanal 25 begrenzenden Wand 41 sind zwei Ausnehmungen 36 und 37 vorhanden, die einander gegenüberliegend ausgerichtet sind, in Strömungsrichtung allerdings versetzt zueinander liegen. Eine erste Ausnehmung 36 nimmt das zweite Gehäuseteil 3 des Volumenstromsensors 1 auf, das erste Gehäuseteil 2 liegt in der zweiten Ausnehmung 37 ein. Entsprechend ist auf der Seite der zweiten Ausnehmung 37 in der Wand 41 des Saugstutzenkanals 25 eine Einsatzöffnung 27 vorgesehen, die in die zweite Ausnehmung 37 mündet. Durch diese Einsatzöffnung 27 ist der Volumenstromsensor 1 in das Pumpengehäuse 26 eingesetzt. An der Saugstutzenkanalwand 41 ist ein Montageflansch 38 angeformt, der die Einsatzöffnung 27 umgibt, und an den der Flansch 28 der Montagebasis 20 des Volumenstromsensor 1 im montierten Zustand angesetzt ist.

Die Einsatzöffnung 27 öffnet sich zu derselben Seite hin, zu der sich auch die Pumpenkammer 34 öffnet. Der Volumenstromsensor 1 erstreckt sich durch die Einsatzöffnung 27 winklig zum Saugstutzenkanal 25 hindurch und liegt ferner auch winklig zur Antriebsachse des Pumpenaggregats.

Figur 7 zeigt einen diagonalen Querschnitt durch das Pumpengehäuse 26 und den Volumenstromsensor 1 entlang der Messstrecke 5, so dass der Blick von oben in den Saugstutzenkanal 25 frei ist, der von der Flüssigkeit von unten durchströmt wird. Es wird deutlich, dass aufgrund der Lamellenform der Tragarme 7, 8 nur die schmale Längskante 19 in Richtung der Strömung liegt und der Volumenstromsensor 1 dadurch einen geringen hydraulischen Widerstand bildet. Demgegenüber schützen die breiten Seiten der lamellenartigen Tragarme 7, 8, wie in Figur 6 erkennbar ist, die Messstrecke 5 vor Wirbeln und Querströmungen im Saugstutzenkanal 25.

Figuren 8 und 9 zeigen einen erfindungsgemäßen Flüssigkeitsvolumenstromsensor gemäß einer zweiten Ausführungsvariante. Er umfasst dieselben Komponenten wie der Volumenstromsensor 1 gemäß der ersten Ausführungsvariante und ist im Wesentlichen auch identisch zu diesem aufgebaut. Nachfolgend werden lediglich die Unterschiede der Volumenstromsensoren 1 gemäß der ersten und zweiten Ausführungsvariante erläutert.

Ein erster wesentlicher Unterschied besteht darin, dass wie in Figur 8 ersichtlich ist, die Tragarme 7, 8 drei gerade Teilabschnitte 22, 23, 23a aufweisen, die in einem Winkel zueinander liegen. Ein erster Teilabschnitt 22 des ersten und zweiten Tragarms 7, 8 erstreckt sich gerade von der Montagebasis 20 weg, d.h. der erste Teilabschnitt 22 besitzt eine Längserstreckung parallel zur Montagebasisachse 33. Ein zweiter Teilabschnitt 23 der Tragarme 7,8 schließt sich dann in dem Winkel an den ersten Teilabschnitt 22 an. Schließlich weisen die beiden Tragarme 7, 8 noch einen dritten Teilabschnitt 23a auf, dessen Erstreckung in Längsrichtung um wenige Grad gegenüber der Erstreckung des mittleren Teilabschnitts 23 in Längsrichtung gekippt ist. Der Winkel beträgt zwischen 120° und 150°.

Der Volumenstromsensor 1 mit abgewinkelten Tragarmen 7, 8 gemäß der Figuren 8 und 9 ermöglicht es, im Saug- oder Druckstutzenkanal 25 eines Pumpengehäuses 26 schräg, d.h. winklig zur Hauptströmung ausgerichtet zu sein, wobei gleichzeitig die horizontale Achse 33 der Montagebasis 20 bezogen auf die Achse 24a des Saugstutzens 24 rechtwinklig liegt. Dies ist in Figur 10 erkennbar, und hat den Vorteil, dass auch der Montageflansch 38 am Pumpengehäuse 26 mit seiner Montagefläche parallel zu der Achse 24a des Saugstutzens 24 liegt und damit insbesondere parallel liegt zu einer Montagefläche 39 eines Flanschs zur Montage des Pumpengehäuses 26 an eine Antriebseinheit.

Ein weiterer Unterschied der zweiten Ausführungsvariante zur ersten Ausführungsvariante des Volumenstromsensors 1 besteht darin, dass die ringförmige Dichtung 9 bei der zweiten Ausführungsvariante in einer Ringnut 10 einliegt, siehe Figur 9. Diese Ringnut 10 entsteht dadurch, dass ein ringförmiger Vorsprung 10a radial vom Sockel 48 absteht und in einem Abstand zu einem zweiten ringförmigen Vorsprung 10b angeordnet ist, welcher axial vom Flansch 28 vorsteht.

Auch die äußere Form des ersten und zweiten Gehäuseteils 2, 3 ist gegenüber der ersten Ausführungsvariante leicht geändert. So besitzt das erste Gehäuseteil 2 zum durchströmbaren Freiraum 6 hin eine schräge Fläche 21, die rechtwinklig zur Messstrecke 5 liegt. Das zweite Gehäuseteil 3 ist kreiszylindrisch.

Schließlich ist ein weiterer Unterschied in der Form des Flanschs 28 der Montagebasis 20 gegeben. Dieser Flansch ist im Wesentlichen quadratisch mit abgerundeten Ecken, in denen jeweils eine Bohrung 49 zur Aufnahme einer Schraube 43 vorhanden ist.

Figur 9 zeigt eine Darstellung von oben auf den Volumenstromsensor 1 gemäß der zweiten Ausführungsvariante. Die Blickrichtung entspricht der entgegengesetzten Strömungsrichtung, sofern der Volumenstromsensor 1 im Rohrabschnitt 25 bestimmungsgemäß montiert ist. Trotz der winklig zueinander liegenden Abschnitte 22, 23, 23a der Tragarme 7, 8 sieht die Strömung lediglich die schmalen abgerundeten Längskanten 19, so dass der Volumenstromsensor 1 in Strömungsrichtung einen geringen hydraulischen Widerstand bildet. Demgegenüber schirmen die beiden Tragarme 7,8 aufgrund ihrer Quererstreckung die Messstrecke 5 ab und schützen sie vor Wirbeln und Querströmungen.

Figur 10 zeigt einen vertikalen Querschnitt durch den Volumenstromsensor 1 gemäß der zweiten Ausführungsvariante im eingesetzten Zustand in ein Pumpengehäuse 26. Die beiden Ultraschallsensoren 11,12 sind jeweils als scheibenförmige Plättchen ausgebildet, die an der dem Freiraum 6 abgewandten Seite der Gehäuseteilwand innenseitig bündig anliegen. Rückseitig der Ultraschallsensoren 11,12 befindet sich jeweils eine elastische Ringscheibe 14,15, die den jeweiligen Ultraschallsensor 11, 12 gegen die entsprechende Gehäuseteilwand drückt. Im zweiten Gehäuseteil 3 drückt die Verschlusskappe 4 die elastische Ringscheibe 14 gegen den Ultraschallsensor 12. Die Verschlusskappe 4 besitzt einen ringförmigen Rücksprung, auf dem ein Dichtring 13 aufsitzt, welcher im verschlossenen Zustand des zweiten Gehäuseteils 3 gegen die Innenwand des Gehäuseteils 3 und die Stirnseite eines ringförmigen, radial nach innen gerichteten Vorsprungs drückt, welcher den Aufnahmeraum für den Ultraschallsensor 12 definiert. Das zweite Gehäuseteil 3 ist somit dicht verschlossen.

Im ersten Gehäuseteil 2 drückt ebenfalls eine elastische Ringscheibe 15 den ersten Ultraschallsensor 11 gegen die Rückseite der schrägen Wand 21. Oberhalb des Ultraschallsensors 11 und der elastischen Ringscheibe 15 ist ein Temperatursensor 16 angeordnet. Der Ultraschallsensor 11, die elastische Platte 15 und der Temperatursensor 16 sind formschlüssig in einem Einsatzelement 17 gehalten, das in dem Aufnahmeraum des ersten Gehäuseteils 2 einliegt. Die Montagebasis 20 ist hohl ausgebildet und weist ebenfalls einen Aufnahmeraum auf, der in den Aufnahmeraum des ersten Gehäuseteils 2 übergeht. Das Einsatzelement 17 liegt in diesem Aufnahmeraum der Montagebasis 20 ein und ist mittels eines Dichtrings 18 gegenüber der Innenseite des Aufnahmeraums in der Montagebasis 20 abgedichtet.

Figuren 10 und 11 zeigen den Volumenstromsensor 1 gemäß der zweiten Ausführungsvariante im bestimmungsgemäß in einem Pumpengehäuse 26 montierten Zustand. Figur 10 entspricht der Darstellung des Pumpengehäuses 26 samt erster Ausführungsvariante gemäß Figur 6. Im Unterschied zu Figur 6 liegt die Achse der Einsatzöffnung 27 rechtwinklig zur Achse 24a des Saugstutzens 24. Entsprechend liegt der die Einsatzöffnung 27 umgebende Montageflansch 38 mit seiner Stirnseite parallel zu der Saugstutzenachse 24a. Die Achse der Einsatzöffnung 27 ist des Weiteren parallel zu der Antriebsachse des Laufrads ausgerichtet.

Des Weiteren ist die stirnseitige Flanschfläche des Montageflanschs 38, an die der Flansch 28 der Montagebasis 20 des Volumenstromsensors 1 angesetzt ist, parallel zu der stirnseitigen Flanschfläche 39 eines die Pumpenkammer 34 umgebenden Flansches ausgerichtet, an die eine Antriebseinheit für die Pumpe angesetzt wird.

Das Pumpengehäuse 26 in den Figuren 6 und 10 wird als in-line Gehäuse bezeichnet, weil die Achse des Druckstutzens mit der Achse 24a des Saugstutzens 24 zusammenfällt. Derartige Pumpengehäuse 26 werden beispielsweise bei elektromotorisch angetriebenen Heizungspumpen oder Trinkwasserpumpen verwendet.

Der für die Montage des Volumenstromsensors 1 vorgesehene Montageflansch 38 am Pumpengehäuse 26 liegt parallel zu dem die Pumpenkammer 34 umgebenden Montageflansch 39, an den die Antriebseinheit anzusetzen ist. Das Zusammenfügen des Volumenstromsensors 1 mit dem Pumpengehäuse 26 erfolgt somit aus derselben Richtung wie das Zusammenfügen von Pumpengehäuse 26 und Antriebseinheit oder Getriebe.

Des Weiteren erstrecken sich die zur Befestigung des Volumenstromsensors 1 vorgesehenen Schrauben 43 parallel zu den Schrauben, mit der die Antriebseinheit bzw. das Getriebe an den Montageflansch 39 der Pumpenkammer 34 befestigt wird. Somit können alle Schrauben nicht nur von derselben Seite, sondern auch von derselben Richtung erreicht und angezogen werden. Dadurch vereinfacht sich der Herstellungsprozess im automatisierten Herstellungsverfahren, da das Pumpengehäuse 26 und/oder ein Montagewerkzeug weniger Bewegungen vollführen muss.

Figur 11 zeigt einen diagonalen Querschnitt durch das Pumpengehäuse 26 und den Volumenstromsensor 1 entlang der Messstrecke 5 mit Blick in den Stutzenkanal 25 hinein, d.h. in die Richtung, aus der die Hauptströmung in das Pumpengehäuse 26 eintritt. In entsprechender Weise zur Figur 7 veranschaulicht Figur 11, dass die Strömung nur die Längskanten 19 der Tragarme 7 und 8 sieht und somit der Volumenstromsensor 1 im montiertem Zustand im Pumpengehäuse 26 nur einen minimalen Strömungswiderstand bildet.

### Bezugszeichenliste

- 1: Volumenstromsensor
- 2: erstes Gehäuseteil
- 3: zweites Gehäuseteil
- 4: Verschlusskappe
- 5: Messstrecke
- 6: Durchströmöffnung/ Zwischenraum
- 7: erster Tragarm
- 8: zweiter Tragarm
- 9: Dichtungsring
- 10: Ringnut
- 10a: Vorsprung
- 10b: Vorsprung
- 11: erster Ultraschallsensor
- 12: zweiter Ultraschallsensor
- 13: Dichtring
- 14: elastische Platte
- 15: elastische Platte
- 16: Temperatursensor
- 17: Einsatzelement
- 18: Dichtring
- 19: Längskante/Stirnseite
- 20: Montagebasis
- 21: schräge Fläche
- 22: erster Teilabschnitt des Tragarms 7, 8
- 23: zweiter Teilabschnitt des Tragarms 7, 8
- 23a: dritter Teilabschnitt des Tragarms 7, 8
- 24: Saugstutzen
- 24a: Achse des Saugstutzens
- 25: Saugstutzenkanal
- 26: Pumpengehäuse
- 27: Einsatzöffnung
- 28: Flansch
- 29: Außenfläche des Tragarms 7,8
- 30: Innenfläche des Tragarms 7,8
- 31: erste Stufe der Montagebasis
- 32: zweite Stufe der Montagebasis
- 33: Achse der Montagebasis
- 34: Pumpenkammer
- 36: Ausnehmung für zweites Gehäuseteil
- 37: Ausnehmung für erstes Gehäuseteil
- 38: Montageflansch der Einsatzöffnung 27
- 39: Montagefläche der Pumpenkammer 34
- 40: Wand des Druckstutzenkanals 35
- 41: Wand des Saugstutzenkanals 25
- 42: Bohrung
- 43: Schraube
- 44: erste elektrisches Leiter
- 45: zweite elektrisches Leiter
- 46: elektrisches Anschlusselement
- 47: Anschlusskabel
- 48: Sockel
- 49: Vorsprung

## Patentansprüche

1. Flüssigkeitsvolumenstromsensor (1) zur Messung der Geschwindigkeit einer Hauptströmung einer Flüssigkeit in einem Rohrabschnitt (25), insbesondere in einem Stutzenkanal (25) eines Pumpengehäuses (26), umfassend ein erstes mit einer Montagebasis (20) verbundenes Gehäuseteil (2), in dem ein erster Ultraschallsensor (11) aufgenommen ist, ein zweites Gehäuseteil (3), in dem ein zweiter Ultraschallsensor (12) aufgenommen ist, und zwei sich gegenüberliegende, vom ersten Gehäuseteil (2) weg erstreckende Tragarme (7, 8), an denen das zweite Gehäuseteil (3) gehalten ist, wobei das zweite Gehäuseteil (3) dem ersten Gehäuseteil (2) unter Ausbildung einer von der Flüssigkeit durchströmbaren Messstrecke (5) beabstandet gegenüberliegt und die beiden Ultraschallsensoren (11, 12) auf einander ausgerichtet sind, **dadurch gekennzeichnet, dass** die beiden Tragarme (7) jeweils in der Form einer die Messstrecke (5) zu jeweils einer Seite hin begrenzenden, strömungsgleichrichtenden Lamelle (7) ausgebildet sind, so dass die Messstrecke (5) abgeschirmt zwischen den beiden Tragarmen (7, 8) liegt.

2. Flüssigkeitsvolumenstromsensor (1) nach Anspruch 1, **dadurch gekennzeichnet, dass** der erste und/ oder der zweite Tragarm (7) und die Gehäuseteile (2, 3) einstückig, insbesondere als ein Spritzgussteil aus Kunststoff, ausgebildet ist.

3. Flüssigikeitsvolumenstromsensor (1) nach Anspruch 1 oder 2, **dadurch gekennzeichnet, dass** sich die beiden Tragarme (7, 8) vom Randbereich (27) des ersten Gehäuseteils (2) zum Randbereich des zweiten Gehäuseteils (3) erstrecken.

4. Flüssigkeitsvolumenstromsensor (1) nach einem der vorherigen Ansprüche, **dadurch gekennzeichnet, dass** die in die Hauptströmungsrichtung orientierten Längskanten (19) der Tragarme (7, 8) abgerundet sind oder eine Schneide bilden.

5. Flüssigkeitsvolumenstromsensor (1) nach einem der vorherigen Ansprüche, **dadurch gekennzeichnet, dass** die zur Messstrecke (5) gerichtete Innenfläche (30) des ersten und/ oder zweiten Tragarms (7, 8) konkav gewölbt ist.

6. Flüssigkeitsvolumenstromsensor (1) nach einem der vorherigen Ansprüche, **dadurch gekennzeichnet, dass** in oder auf zumindest einem, vorzugsweise jedem der beiden Tragarme (7, 8) ein elektrischer Leiter zur elektrischen Kontaktierung des zweiten Ultraschallsensors (12) oder eines in oder an dem zweiten Gehäuseteil (3) angeordneten weiteren elektrischen Bauteils verläuft.

7. Flüssigkeitsvolumenstromsensor (1) nach Anspruch 6, **dadurch gekennzeichnet, dass** die elektrischen Leiter vollumspritzt in den beiden Tragarmen (7, 8) eingebettet sind.

8. Flüssigkeitsvolumenstromsensor (1) nach Anspruch 6 oder 7, **dadurch gekennzeichnet, dass** die elektrischen Leiter durch Flachstäbe oder Rundstäbe oder durch metallische Leiterbahnen auf der Oberfläche der Tragarme (7, 8) gebildet sind, die mittels MID hergestellt sind.

9. Flüssigkeitsvolumenstromsensor (1) nach einem der Ansprüche 6 bis 8, **dadurch gekennzeichnet, dass** sich die elektrischen Leiter von dem zweiten Ultraschallsensor (12) unterbrechungsfrei bis zu einem elektrischen Anschlusselement in der Montagebasis (20) erstrecken, wobei sie zumindest teilweise in der Wand der Montagebasis (20) verlaufen, insbesondere dort eingebettet sind.

10. Flüssigkeitsvolumenstromsensor (1) nach einem der vorherigen Ansprüche, **dadurch gekennzeichnet, dass** die Tragarme (7, 8) zumindest zwei gerade Teilabschnitte (22, 23) aufweisen, die in einem Winkel zueinander liegen, wobei sich insbesondere zumindest einer der Teilabschnitte (22, 23) in einem Winkel (α) zu einer horizontalen Achse (33) der Montagebasis (20) in Richtung des zweiten Gehäuseteils (3) erstreckt.

11. Flüssigkeitsvolumenstromsensor (1) nach Anspruch 10, **dadurch gekennzeichnet, dass** der Winkel (α) zwischen 120° und 150° beträgt.

12. Flüssigkeitsvolumenstromsensor (1) nach einem der vorherigen Ansprüche, **dadurch gekennzeichnet, dass** sich zumindest ein Teil der Tragarme (7, 8) bogenförmig unter Beibehaltung eines konstanten Abstandes zur Messstrecke (5) vom ersten Gehäuseteil (2) in Richtung des zweiten Gehäuseteils (3) erstreckt.

13. Flüssigikeitsvolumenstromsensor (1) nach einem der vorherigen Ansprüche, **dadurch gekennzeichnet, dass** im ersten und/ oder im zweiten Gehäuseteil (2, 3) und/ oder in einem der Tragarme (7, 8) ein Temperatursensor (16) zur Messung der Temperatur der Flüssigkeit angeordnet ist.

14. Pumpengehäuse (26) mit einer Pumpenkammer (34) zur Aufnahme eines von einer Antriebseinheit antreibbaren Laufrads, einem in diese mündenden Saugstutzenkanal (25) und einem von dieser abgehenden Druckstutzenkanal (35), **gekennzeichnet durch** einen
Flüssigikeitsvolumenstromsensor (1) nach einem der Ansprüche 1 bis 23, der im Saugstutzenkanal (25) oder Druckstutzenkanal (35) angeordnet ist, wobei die beiden Ultraschallsensoren (11, 12) bezogen auf die Hauptströmungsrichtung versetzt zueinander liegen.

## Claims

1. Liquid volume flow sensor (1) to measure the speed of a main flow of a liquid in a pipe section (25), notably in a nozzle duct (25) of a pump casing (26), encompassing a first casing section (2) connected to a mounting base (20), which holds a first ultrasound sensor (11), a second casing section (3), which holds a second ultrasound sensor (12), and two supporting arms (7, 8) opposite to each other that extend away from first casing section (2), on which the second casing section (3) is supported, in which the second casing section (3) is across from the first casing section (2) at a distance, forming a measurement section (5) through which the liquid can flow and the two ultrasound sensors (11, 12) are aligned with each other, **characterised by** the two supporting arms (7) being realised in the form of a flow straightening fin (7) that respectively borders one side of the measurement section (5) so that the measurement section (5) is shielded between the two supporting arms (7, 8).

2. Liquid volume flow sensor (1) according to claim 1, **characterised by** the first and/or second supporting arm (7) and the casing sections (2, 3) being made of one piece, notably as a plastic injection moulded component.

3. Liquid volume flow sensor (1) according to claim 1 or 2, **characterised by** the two supporting arms (7, 8) extending from the boundary area (27) of the first casing section (2) to the boundary area of the second casing section (3).

4. Liquid volume flow sensor (1) according to one of the preceding claims, **characterised by** the longitudinal edges (19) of the supporting arms (7, 8) oriented in the main flow direction being rounded or forming a blade.

5. Liquid volume flow sensor (1) according to one of the preceding claims, **characterised by** the inner surface (30) of the first and/or second supporting arm (7, 8) facing the measurement section (5) having a concave curvature.

6. Liquid volume flow sensor (1) according to one of the preceding claims, **characterised by** an electrical conductor for electrical contacting of the second ultrasound sensor (12) being arranged in or on at least one, preferably both of the two supporting arms (7, 8) or an additional electrical component arranged in or on the second casing section (3).

7. Liquid volume flow sensor (1) according to claim 6, **characterised by** the electrical conductors being fully embedded/moulded in the supporting arms (7, 8).

8. Liquid volume flow sensor (1) according to claim 6 or 7, **characterised by** the electrical conductors being formed by flat bars or round bars or by metallic PCB tracks on the surface of the supporting arms (7, 8) produced by means of MID.

9. Liquid volume flow sensor (1) according to one of the claims 6 through 8, **characterised by** the electrical conductors extending continuously from the second ultrasound sensor (12) to an electrical connection element in the mounting base (20), in which they run at least partly in the wall of the mounting base (20) and, in particular, are embedded in it.

10. Liquid volume flow sensor (1) according to one of the preceding claims, **characterised by** the supporting arms (7, 8) having at least two straight sections (22, 23) at an angle relative to each other, in which, in particular, at least one of the sections (22, 23) extends at an angle (α) to a horizontal axis (33) of the mounting base (20) in the direction of the second casing section (3).

11. Liquid volume flow sensor (1) according to claim 10, **characterised by** the angle (α) being in the range of 120° to 150°.

12. Liquid volume flow sensor (1) according to one of the preceding claims, **characterised by** at least a part of the supporting arms (7, 8) extending in a curve, maintaining a constant distance to the measurement section (5), from the first casing section (2) in the direction of the second casing section (3).

13. Liquid volume flow sensor (1) according to one of the preceding claims, **characterised by** a temperature sensor (16) to measure the temperature of the liquid being arranged in the first and/or second casing section (2, 3) and/or in one of the supporting arms (7, 8).

14. Pump casing (26) with a pump chamber (34) to hold an impeller that can be driven by a drive unit, a suction nozzle duct (25) leading into the same and a pressure nozzle duct (35) leading out of the same, **characterised by** a liquid volume flow sensor (1) according to one of the claims 1 through 23, which is arranged in the suction nozzle duct (25) or pressure nozzle duct (35), in which the two ultrasound sensors (11, 12) are offset relative to each other in reference to the main flow direction.

## Revendications

1. Capteur de débit volumique d'un liquide (1) destiné à mesurer la vitesse d'un flux principal d'un liquide dans une section de tube (25), en particulier dans un canal à tubulure (25) d'un carter de pompe (26), formé d'une première partie de carter (2) reliée avec une base de montage (20), dans laquelle est monté un premier capteur à ultrasons (11), d'une seconde partie de carter (3), dans laquelle est monté un second capteur à ultrasons (12), et de deux bras de support (7, 8) s'écartant en direction opposée de la première partie de carter (2) et retenant la seconde partie de carter (3), sachant que la seconde partie de carter (3) et la première partie de carter (2) pour former une section de mesure à travers laquelle le liquide peut s'écouler (5) et que les deux capteurs à ultrasons (11, 12) sont orientés l'un vers l'autre, **caractérisé en ce que** les deux bras de support (7) sont conçus chacun sous la forme d'une lamelle (7) de rectification de l'écoulement délimitant la section de mesure (5) sur un côté, de telle façon que la section de mesure (5) soit protégée entre les deux bras de support (7, 8).

2. Capteur de débit volumique d'un liquide (1) selon la revendication 1, **caractérisé en ce que** le premier et/ou le second bras de support (7) et les parties du carter (2, 3) sont d'une pièce, plus particulièrement une pièce moulée en matière plastique.

3. Capteur de débit volumique d'un liquide (1) selon la revendication 1 ou 2, **caractérisé en ce que** les deux bras de support (7, 8) vont de la bordure (27) de la première partie du carter (2) à la bordure de la seconde partie du carter (3).

4. Capteur de débit volumique d'un liquide (1) selon l'une des revendications précédentes, **caractérisé en ce que** les bords latéraux (19) orientés dans le sens du flux principal des bras de support (7, 8) sont arrondis ou forment une lame.

5. Capteur de débit volumique d'un liquide (1) selon l'une des revendications précédentes, **caractérisé en ce que** la surface intérieure (30) orientée vers la section de mesure (5) du premier et/ou du second bras de support (7, 8) est concave.

6. Capteur de débit volumique d'un liquide (1) selon l'une des revendications précédentes, **caractérisé en ce que** à l'intérieur ou sur la surface d'au moins un, de préférence de chacun des deux bras de support (7, 8) est monté un conducteur électrique destiné à la mise en contact électrique du second capteur à ultrasons (12) ou d'un composant électrique monté à l'intérieur ou sur la surface de la seconde partie du carter (3).

7. Capteur de débit volumique d'un liquide (1) selon la revendication 6, **caractérisé en ce que** les conducteurs électriques sont complètement inclus dans les deux bras de support (7, 8).

8. Capteur de débit volumique d'un liquide (1) selon la revendication 6 ou 7, **caractérisé en ce que** les conducteurs électriques sont formés de baguettes plates ou rondes ou de pistes conductrices sur la surface des bras de support (7, 8), fabriquées par MID.

9. Capteur de débit volumique d'un liquide (1) selon l'une des revendications 6 à 8, **caractérisé en ce que** les conducteurs électriques vont, sans interruption, du second capteur à ultrasons (12) à un élément de raccord électrique de la base de montage (20), sachant qu'ils s'étendent au moins en partie dans la paroi de la base de montage (20) ou plus particulièrement y sont intégrés.

10. Capteur de débit volumique d'un liquide (1) selon l'une des revendications précédentes, **caractérisé en ce que** les bras de support (7, 8) présentent au moins deux sections droites (22, 23) formant un angle, sachant que plus particulièrement au moins une des sections (22, 23) forme un angle (a) avec l'axe horizontal (33) de la base de montage (20) en direction de la seconde partie du carter (3).

11. Capteur de débit volumique d'un liquide (1) selon la revendication 10, **caractérisée en ce que** l'angle (a) mesure entre 120° et 150°.

12. Capteur de débit volumique d'un liquide (1) selon l'une des revendications précédentes, **caractérisé en ce que** au moins une section des bras de support (7, 8) est arquée tout en maintenant une distance constante par rapport à la section de mesure (5) de la première partie du carter(2) à la seconde partie du carter (3).

13. Capteur de débit volumique d'un liquide (1) selon l'une des revendications précédentes, **caractérisé en ce que** dans la première et/ou seconde partie du carter (2, 3) et/ou dans l'un des bras de support (7, 8) est monté un capteur de température (16) destiné à mesurer la température du liquide.

14. Carter de pompe (26) avec une chambre de pompe (34) destinée à recevoir un rotor entraîné par une unité d'entraînement, un canal d'aspiration à tubulure pénétrant dans le rotor (25) et un canal de pression à tubulure sortant du rotor (35), **caractérisé en ce que** un capteur de débit volumique d'un liquide (1) selon l'une des revendications 1 à 23, monté dans le canal d'aspiration à tubulure (25) ou le canal de pression à tubulure (35), sachant que les deux capteurs à ultrasons (11, 12) sont décalées l'un par rapport à l'autre par rapport au sens du flux principal.
